# EUROPÄISCHE PATENTSCHRIFT

(11) **EP 3 625 474 B1**
(45) Veröffentlichungstag und Bekanntmachung des Hinweises auf die Patenterteilung: **10.05.2023**
(21) Anmeldenummer: 18736800.6
(22) Anmeldetag: 15.05.2018
(51) Int. Cl.: F16D 65/02, F16D 65/18

(54) **ANORDNUNG EINER SCHEIBENBREMSE FÜR EIN NUTZFAHRZEUG**
COMMERCIAL VEHICLE DISC BRAKE ARRANGEMENT
FREINAGE À DISQUE D'UN VÉHICULE UTILITAIRE

(30) Priorität: 16.05.2017 DE 102017110640
(43) Veröffentlichungstag der Anmeldung: 25.03.2020
(73) Patentinhaber: KNORR-BREMSE Systeme für Nutzfahrzeuge GmbH, 80809 München (DE)
(72) Erfinder: HABERMANN, Dimitrij, 94569 Stephansposching (DE); HEINDL, Martin, 94535 Eging am See (DE); ST GER, Christian, 94486 Osterhofen (DE)
(86) Internationale Anmeldenummer: PCT/EP2018/062440
(87) Internationale Veröffentlichungsnummer: WO 2018/210783

(56) Entgegenhaltungen:
- WO-A1-2005/095815
- DE-A1-102005 052 951
- DE-A1-102006 004 487
- JP-A- 2001 280 377

## Beschreibung

Die Erfindung betrifft eine Anordnung einer Scheibenbremse für ein Nutzfahrzeug nach dem Oberbegriff des Anspruchs 1.

Pneumatisch betätigte Scheibenbremsen gehören mittlerweile zur Standardausrüstung bei schweren Nutzfahrzeugen.

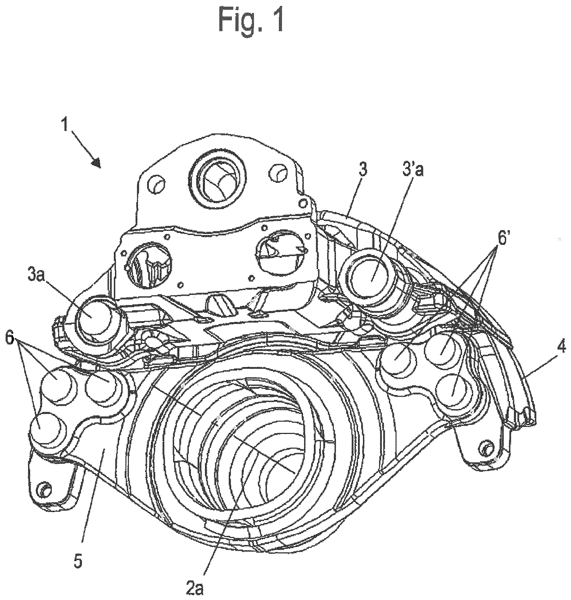

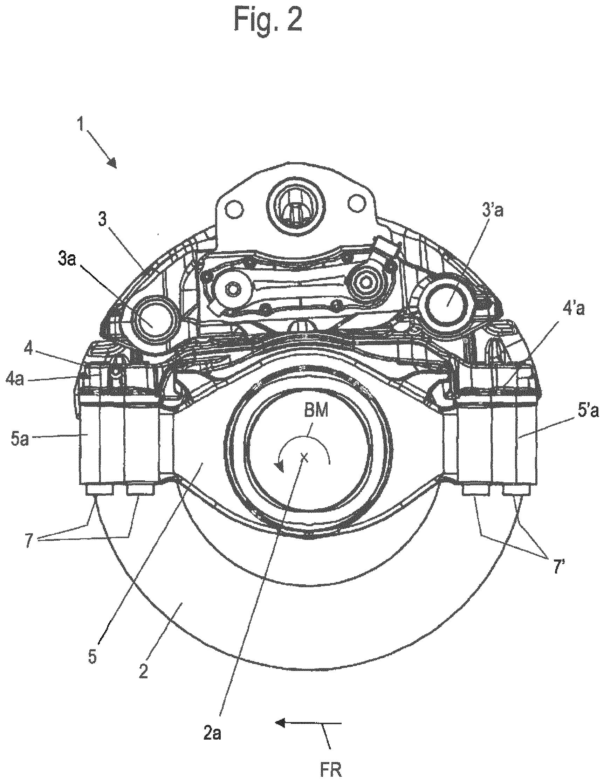

**Figuren 1** **und** **2** zeigen schematische Ansichten von Scheibenbremsen aus dem Stand der Technik. Ein Fahrzeug, welches diese Scheibenbremse 1 aufweist, fährt in einer Fahrtrichtung FR, wobei eine Drehung der Bremsscheibe 2 in den Ansichten der Figuren 1 und 2 gegen den Uhrzeigersinn erfolgt. Danach ist eine einlaufende und eine auslaufende Seite an der Scheibenbremse 1 festgelegt. Zur Unterscheidung dieser Seiten sind die Bezugszeichen der Bauteile auf der einlaufenden Seite im Weiteren mit einem Apostroph "'" versehen.

Bei einer solchen Scheibenbremse 1 wird die Zuspannkraft auf Bremsbeläge, die in einem Bremsträger 4 beiderseits einer Bremsscheibe 2 mit einer Bremsscheibendrehachse 2a angeordnet sind, über eine so genannte Zuspanneinheit in einem Bremssattel 3 erzeugt. Dadurch entsteht zwischen der Bremsscheibe 2 und den Bremsbelägen beim Bremsen eine Reibkraft, woraus ein Bremsmoment BM um die Bremsscheibendrehachse 2a resultiert. Die auf die Bremsbeläge wirkenden Kräfte werden über den Bremsträger 4 ausgeleitet, welcher direkt mit der Achse über einen so genannten Achsflansch 5 positionsfest axial (Figur 1) oder tangential (Figur 2) verschraubt ist

Zudem bildet der Bremsträger 4 eine Lagerung für den axial, d.h. parallel zu der Bremsscheibendrehachse 2a, verschiebbaren Bremssattel 3. Hierzu dienen Längslager 3a, 3'a für die Bremssattelführung.

Für die Befestigung der Scheibenbremse 1 an dem Achsflansch 5 wird für gewöhnlich eine so genannte axiale Schnittstelle verwendet, was in Figur 1 gezeigt ist. Dabei steht eine Flanschfläche des Achsflansches senkrecht zu der Bremsscheibendrehachse 2a der Bremsscheibe 2. Die Befestigung erfolgt mit Hilfe von Befestigungselementen 6, 6', hier Schrauben, die parallel zu der Bremsscheibendrehachse 2a angeordnet sind. Zum einen wird dadurch die Bremse ausreichend genau in axialer Richtung positioniert, zum anderen kann durch diese Anordnung das beim Bremsen entstehende Moment um die Hochachse gut in den Achsflansch 5 abgeleitet werden ohne, dass es zu einer Verschränkung von Führungsholmen der Längslager 3a, 3'a kommt. Allerdings sind die Befestigungsschrauben 6, 6' bei der axialen Schnittstelle je nach Applikation nur schwer erreichbar, was den Bremsträgertausch erschwert.

Eine Lösung hierbei kann eine so genannte tangentiale Schnittstelle sein, welche in Figur 2 dargestellt ist. Dabei liegt die Flanschfläche in Verbindungsabschnitten 5a, 5'a des Achsflansches 5 parallel zur Bremsscheibendrehachse 2a. Die Verschraubung des Bremsträgers 4 erfolgt hierbei radial, wobei der Bremsträger 4 über Bremsträgerflansche 4a, 4'a mit den Verbindungsabschnitten 5a, 5'a des Achsflansches 5 mit Befestigungselementen 7, 7' fest verbunden wird. Diese Ausführung hat jedoch folgende Nachteile: starke Belastung des Bremsträgers 4, wodurch dieser entsprechend massiv ausgeführt werden muss, ungünstiges Verformungsverhalten und die daraus resultierende Belastung der Längslager 3a, 3'a der Sattelführung.

Der Erfindung liegt die Aufgabe zugrunde, eine Scheibenbremse der gattungsgemäßen Art so weiterzuentwickeln, dass unter Beibehaltung der radialen Verschraubung die bestehende tangentiale Schnittstelle soweit verbessert wird, dass eine Belastung des Bremsträgers 4 reduziert wird Das Dokument DE 10 2005 052 951 A1 zeigt eine konventionelle radiale Bremssattelverbindung, mit flachen Anlegung zwischen Sattel und Flansch.

Diese Aufgabe wird durch eine Scheibenbremse mit den Merkmalen des Anspruchs 1 gelöst.

Eine erfindungsgemäße Anordnung einer Scheibenbremse für ein Nutzfahrzeug und eines Achsflansches, wobei die Scheibenbremse einen eine Bremsscheibe umfassenden Bremssattel, der an einem ortsfesten Bremsträger bezogen auf die Bremsscheibe, axial verschiebbar befestigt ist, aufweist, wobei der Bremsträger an dem Achsflansch in tangentialen Schnittstellen, die zur Bremsscheibe senkrecht angeordnete Flächen aufweisen, mit Befestigungselementen befestigt ist, ist so ausgebildet, dass die tangentialen Schnittstellen mindestens eine formschlüssige Verbindung zwischen jeweils einem Bremsträgerflansch des Bremsträgers und jeweils einem Verbindungsabschnitt des Achsflansches aufweisen.

Die erfindungsgemäße Anordnung kombiniert die Vorteile sowohl der axialen als auch der radialen (tangentialen) Schnittstelle.

In einer Ausführung weist die mindestens eine formschlüssige Verbindung mindestens zwei aufeinander senkrecht stehende Flächen eines jeweiligen Verbindungsabschnitts des Achsflansches und mit diesen in Kontakt stehende mindestens zwei aufeinander senkrecht stehende Flächen eines jeweiligen Bremsträgerflansches des Bremsträgers auf.

Die Anordnung basiert auf der tangentialen Schnittstelle, jedoch weisen sowohl der Achsflansch als auch der Bremsträger zusätzliche senkrechte parallel zur Bremsscheibe verlaufende korrespondierende Flächen auf. Diese dienen einerseits zur genauen Ausrichtung der Bremse in axialer Richtung, können jedoch auch die im Betrieb auftretenden axialen Kräfte abfangen und somit eine Verformung und Belastung des Bremsträgers reduzieren. Der Bremsträger kann mit geringerem Materialeinsatz ausgeführt werden. Die Belastung der Sattelführung sinkt ebenfalls.

In einer weiteren Ausführung ist vorgesehen, dass die mindestens zwei aufeinander senkrecht stehenden Flächen eines jeweiligen Verbindungsabschnitts des Achsflansches zur Bremsscheibe senkrecht angeordneten Flächen und auf diesen senkrecht stehende, zur Bremsscheibe parallel angeordnete Flächen an Längsvorsprüngen und Ausnehmungen aufweisen, wobei die mindestens zwei aufeinander senkrecht stehenden Flächen eines jeweiligen Bremsträgerflansches des Bremsträgers zur Bremsscheibe senkrecht angeordneten Flächen und auf diesen senkrecht stehende, zur Bremsscheibe parallel angeordnete Flächen an Längsvorsprüngen und Ausnehmungen aufweisen. Dies ist vorteilhaft, da eine Reduzierung der Relativbewegung (Rutschen) zwischen Bremsträger und Achsflansch durch die formschlüssige Verbindung verhindert bzw. auf ein Mindestmaß reduziert werden kann.

In einer alternativen Ausführung weist die mindestens eine formschlüssige Verbindung mindestens eine Passschraube auf. Die Passschraube erzeugt einen formschlüssigen Verbund zwischen Bremsträger und Achsflansch und hat einen sehr positiven Einfluss auf die Bauteilfestigkeit des Bremsträgers.

Dazu weist die formschlüssige Verbindung mit der mindestens einen Passschraube eine Durchgangsbohrung mit mindestens einem teilweisen Abschnitt mit einer Passungsbohrung und eine Gewindebohrung mit einem Abschnitt mit einer Passungsbohrung auf.

Weiterhin ist in einer Ausführung vorgesehen, dass die Durchgangsbohrung mit dem mindestens einen teilweisen Abschnitt mit einer Passungsbohrung in dem Verbindungsabschnitt des Achsflansches und die Gewindebohrung mit dem Abschnitt mit einer Passungsbohrung in dem Bremsträgerflansch des Bremsträgers angeordnet ist, oder dass die Durchgangsbohrung mit dem mindestens einen teilweisen Abschnitt mit einer Passungsbohrung in dem Bremsträgerflansch des Bremsträgers und die Gewindebohrung mit dem Abschnitt mit einer Passungsbohrung in dem Verbindungsabschnitt des Achsflansches angeordnet ist. Hierbei können folgende Punkte vorteilhaft eingehalten werden:
- Bauraum
- einfache Herstellbarkeit
- einfache Montierbarkeit
- Lastwechsel bei definiertem Bremsmoment
- geringe Verformung / hohe Steifigkeit
- kostengünstig
- verschleißarme Führung der Bremsbeläge
- hohe Korrosionsbeständigkeit
- geringes Bauteilgewicht

Eine alternative Ausführung sieht vor, dass die mindestens eine formschlüssige Verbindung mindestens einen Zapfen in Form eines Vorsprungs und eine dazu jeweilige korrespondierende Einformung am Gegenstück für einen Eingriff des Vorsprungs aufweist. Diese Zapfen sind bei der Herstellung des Bremsträgerflansches und auch des Verbindungsabschnitts des Achsflansches in vorteilhafter Weise zusammen mit diesen relativ einfach realisierbar.

Hierbei kann der mindestens eine Zapfen in Form eines Vorsprungs an dem Bremsträgerflansch des Bremsträgers angeordnet sein und die dazu jeweilige korrespondierende Einformung an dem Verbindungsabschnitt des Achsflansches für einen Eingriff des Vorsprungs angeordnet sein, oder der mindestens eine Zapfen kann in Form eines Vorsprungs an dem Verbindungsabschnitt des Achsflansches angeordnet sein und die dazu jeweilige korrespondierende Einformung kann an dem Bremsträgerflansch des Bremsträgers angeordnet sein.

Erfindungsgemäß kann der mindestens eine Zapfen in Form eines Vorsprungs eine zylindrige bzw. ringförmige Gestalt oder die Gestalt einer Passfeder aufweisen, wodurch eine Anpassung an verschiedene Einsatzfälle ermöglicht werden kann.

In einer Ausführung sind die Vorsprünge einstückig mit dem jeweiligen Bremsträgerflansch des Bremsträgers bzw. mit dem jeweiligen Verbindungsabschnitt des Achsflansches ausgebildet. Dies ist vorteilhaft, da die Vorsprünge zusammen mit dem jeweiligen Gussteil hergestellt werden können.

Eine alternative Ausführung sieht vor, dass die Vorsprünge, welche mehreren Befestigungselementen zugeordnet sind, als separate Teile ausgebildet und mit Befestigungselementen, z.B. Schrauben, und geeigneten Mitteln zur Positionierung, an dem jeweiligen Bremsträgerflansch bzw. an dem jeweiligen Verbindungsabschnitt angebracht sind. Der Vorteil hierbei besteht darin, dass diese Teile unabhängig von den zugehörigen Bauteilen (Bremsträger, Achsflansch) bearbeitet werden können.

In einer weiteren alternativen Ausführung können alle Vorsprünge als separate Teile ausgebildet sein und mit Befestigungselementen, z.B. Schrauben, und geeigneten Mitteln zur Positionierung, an dem jeweiligen Bremsträgerflansch bzw. an dem jeweiligen Verbindungsabschnitt angebracht sein.

Die als separate Teile ausgebildeten Vorsprünge können in einer Ausführung Passfedern sein. Diese Maschinenelemente sind handelsübliche Bauteile und weisen schon eine passungsgerechte Bearbeitung auf, die nachträglich nicht mehr erforderlich ist.

Weitere vorteilhafte Ausbildungen der Erfindung sind in den Unteransprüchen angegeben.

Ausführungsbeispiele der Erfindung werden nachfolgend anhand der beigefügten Zeichnungen beschrieben.

Es zeigen:
- Figur 1-2: schematische Ansichten von Scheibenbremsen aus dem Stand der Technik;
- Figur 3: eine schematische Perspektivansicht einer Scheibenbremse aus dem Stand der Technik;
- Figur 4: eine schematische Schnittansicht von Schnittstellen eines ersten Ausführungsbeispiels einer erfindungsgemäßen Scheibenbremse;
- Figur 4b-4c: schematische Schnittansichten von Varianten von Schnittstellen des ersten Ausführungsbeispiels der erfindungsgemäßen Scheibenbremse;
- Figur 5-5a: schematische Draufsichten auf weitere Varianten von Schnittstellen eines Bremsträgers des ersten Ausführungsbeispiels;
- Figur 6-6a: schematische perspektivische Explosionsansichten der Schnittstellen des ersten Ausführungsbeispiels;
- Figur 7-8: schematische Ansichten des ersten Ausführungsbeispiels mit der Variante nach Figur 4b;
- Figur 9: eine schematische Ansicht eines zweiten Ausführungsbeispiels der erfindungsgemäßen Scheibenbremse;
- Figur 10: eine schematische Schnittansicht gemäß X-X nach Figur 9;
- Figur 11: eine schematische Teilschnittansicht eines dritten Ausführungsbeispiels der erfindungsgemäßen Scheibenbremse;
- Figur 12: eine schematische Explosionsansicht; und
- Figur 13-18: schematische Ansichten von Varianten des dritten Ausführungsbeispiels der erfindungsgemäßen Scheibenbremse.

**Figur 1** und **Figur 2** sind bereits in der Beschreibungseinleitung beschrieben.

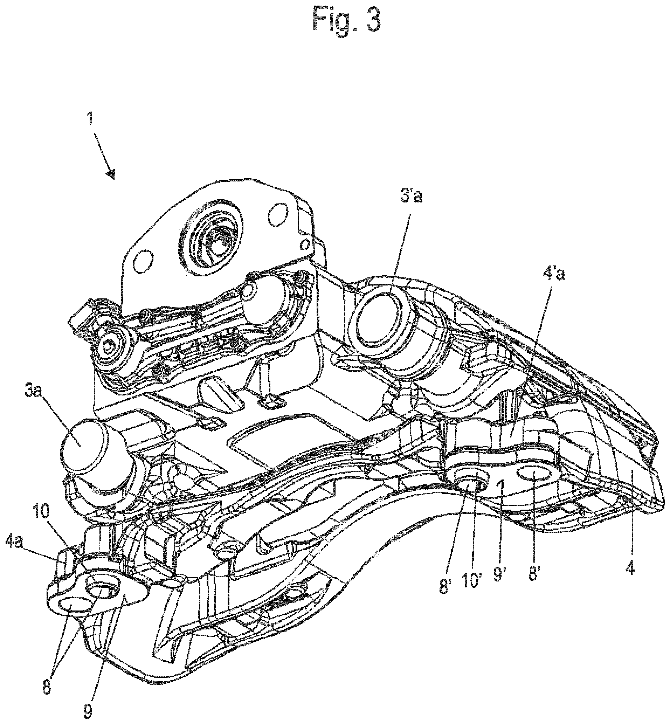

**Figur 3** stellt eine schematische Perspektivansicht einer weiteren Scheibenbremse 1 aus dem Stand der Technik dar.

In Figur 3 ist eine tangentiale Schnittstelle dargestellt. Diese umfasst eine ebene Flanschfläche 9, 9' an jedem Bremsträgerflansch 4a, vier Gewindebohrungen 8, 8', die der Verschraubung der Scheibenbremse 1 auf dem Achsflansch 5 (siehe Figur 2) dienen, und zwei zu den Gewindebohrungen 8, 8' koaxial angeordnete Senkungen (nicht bezeichnet), in die jeweils eine geschlitzte Buchse als Einsatz 10, 10' eingelassen sind. Der Achsflansch 5 verfügt ebenfalls um entsprechende Senkungen, in welche die in dem Bremsträgerflansch 4a, 4'a montierten Einsätze 10, 10' eingreifen. Diese Einsätze 10, 10' dienen lediglich der Positionierung der Scheibenbremse 1 auf der Achse bzw. auf dem Achsflansch 5 und tragen nur bedingt zur Kraftübertragung bei. Dadurch kann es unter hoher Last zu einer starken Verformung des Bremsträgers sowie zu Verschränkungen der Längslager 3a, 3'a der Führung des Bremssattels 3 kommen.

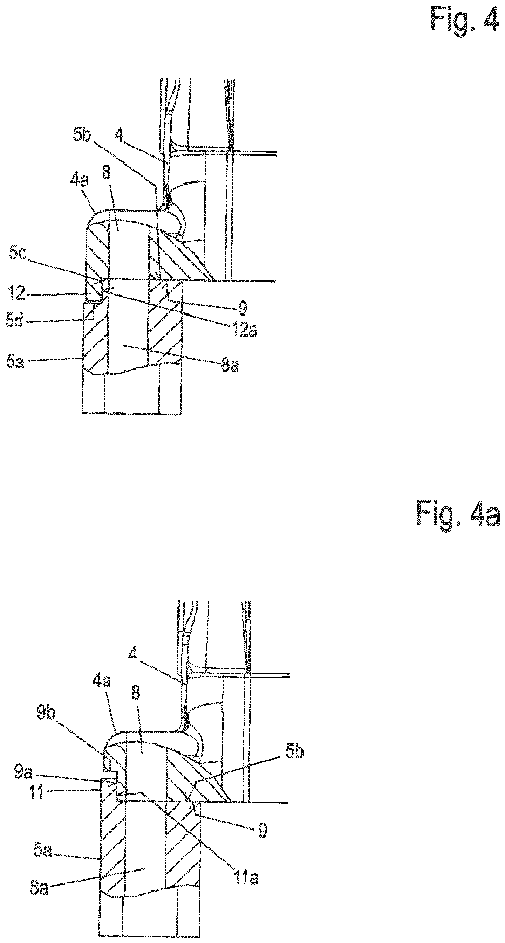

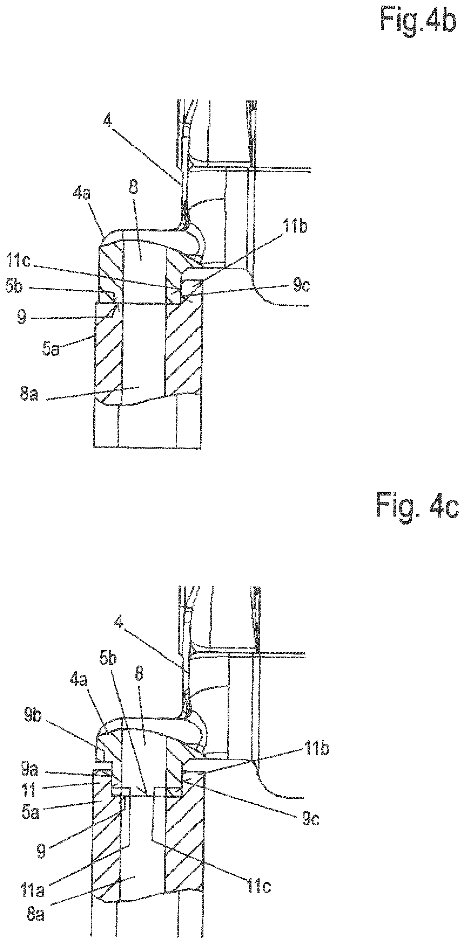

**Figur 4** zeigt eine schematische Schnittansicht einer Schnittstelle eines ersten Ausführungsbeispiels einer erfindungsgemäßen Scheibenbremse 1. In den **Figuren 4b bis 4c** sind schematische Schnittansichten von Varianten von Schnittstelle des ersten Ausführungsbeispiels der erfindungsgemäßen Scheibenbremse 1 dargestellt.

Das hier beschriebene erste Ausführungsbeispiel mit seinen Varianten kombiniert die Vorteile sowohl der axialen als auch der radialen (tangentialen) Schnittstelle. Sie basieren auf der tangentialen Schnittstelle, jedoch verfügen sowohl der Verbindungsabschnitt 5a, 5'a des Achsflansches 5 als auch der Bremsträgerflansch 4a, 4'a des Bremsträgers 4 um zusätzliche senkrechte, parallel zur Bremsscheibe 2 verlaufende korrespondierende Flächen. Diese dienen einerseits zur genauen Ausrichtung der Scheibenbremse 1 in axialer Richtung der Bremsscheibendrehachse 2a, können jedoch auch die im Betrieb auftretenden axialen Kräfte abfangen und somit eine Verformung und Belastung des Bremsträgers 4 reduzieren.

In den Figuren 4 bis 4c sind Schnittansichten der Schnittstelle ohne Verschraubungen auf der auslaufenden Seite (links in Figur 3) gezeigt.

In Figur 4 liegt die Flanschfläche 9 des Bremsträgerflansches 4a auf einer Fläche 5b des Verbindungsabschnitts 5a des Achsflansches 5. An der der Bremsscheibe 2 abgewandten Seite des Bremsträgerflansches 4a ist ein nach unten von der Flanschfläche 9 des Bremsträgerflansches 4a hervorstehender Längsvorsprung 12 angeformt, der in eine Ausnehmung 5d des Verbindungsabschnitts 5a des Achsflansches 5 eingreift. Dabei steht eine seitliche Fläche 12a des Längsvorsprungs 12 mit einer Seitenfläche 5c der Ausnehmung 5d des Verbindungsabschnitts 5a in Kontakt.

Die Variante nach **Figur 4a** zeigt die geometrische Umkehr zu Figur 4. Dabei weist der Verbindungsabschnitt 5a einen nach oben von der Fläche 5b hervorstehenden Längsflansch 11 auf, der in eine Ausnehmung 9b des Bremsträgerflansches 4a eingreift. Eine seitliche Fläche 11a des Längsvorsprungs 11 steht mit einer seitlichen Fläche 9a der Ausnehmung 9b des Bremsträgerflansches 4a in Kontakt.

**Figur 4b** zeigt eine Variante als seitliche Umkehr zu Figur 4a. Hier weist der Verbindungsabschnitt 5a einen nach oben von der Fläche 5b hervorstehenden Längsflansch 11b auf der der Bremsscheibe 2 zugewandten Seite auf, der in eine nicht bezeichnete Ausnehmung des Bremsträgerflansches 4a eingreift. Eine seitliche Fläche 11c des Längsvorsprungs 11b steht mit einer seitlichen Fläche 9c des Bremsträgerflansches 4a in Kontakt.

Schließlich sind in der Variante nach Figur 4c zwei Längsvorsprünge 11 und 11b auf dem Verbindungsabschnitt 5a angeformt, von denen einer auf der der Bremsscheibe 2 zugewandten Seite und einer auf der der Bremsscheibe 2 abgewandten Seite angeordnet ist. Der Bremsträgerflansch 4a ist zwischen diesen Längsvorsprüngen 11 und 11b in einer von diesen so gebildeten Nut angeordnet, wobei seine seitlichen Flächen 9a, 9c jeweils mit einer seitlichen Fläche 11c, 11a eines Längsvorsprungs 11, 11b in Kontakt stehen.

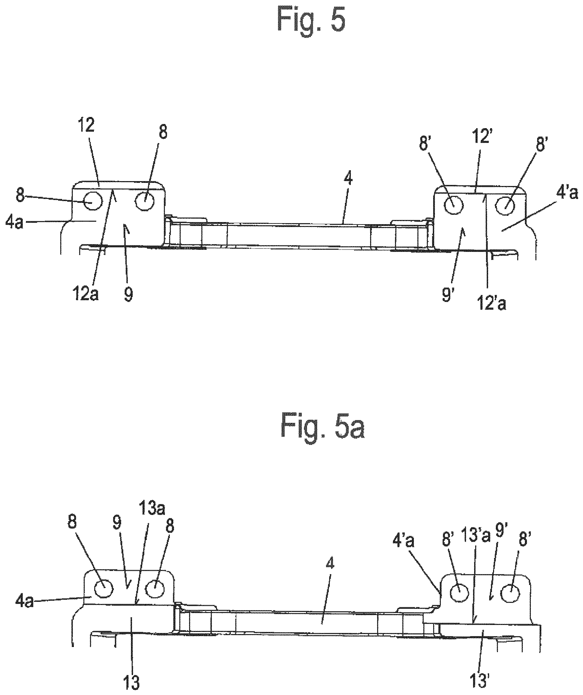

In den **Figuren 5 und 5a** sind schematische Draufsichten auf weitere Varianten von Schnittstellen des Bremsträgers 4 des ersten Ausführungsbeispiels gezeigt.

In der Variante nach **Figur 5** liegen beide Flanschflächen 9, 9' in einer Ebene, wobei die Längsvorsprünge 12 von diesen (in der Figur 5 aus der Zeichenebene heraus) hervorstehen wie in Figur 4a gezeigt.

Die Variante nach **Figur 5a** sind Längsvorsprünge 13, 13' auf der der Bremsscheibe 2 zugewandten Seite auf den Flanschflächen 9, 9' angeformt, wobei die Ausdehnung dieser Längsvorsprünge 13, 13' in axialer Richtung der Bremsscheibendrehachse 2a unterschiedlich sind. Daraus resultieren versetzte und verschieden große Flanschflächen 9, 9'.

In den Figuren 5 und 5a sind auch die seitlichen Flächen 12a, 12'a, 13a, 13'a zur Kontaktierung der entsprechenden Flächen des Verbindungsabschnitts 5a, 5'a gezeigt.

In weiteren, nicht gezeigten aber leicht vorstellbaren Varianten können die Längsvorsprünge 11, 11b; 12, 12', 13, 13' nur auf einer Flanschfläche 9 oder 9' oder auf beiden angeordnet sein. Weiterhin sind Kombinationen des oben beschriebenen Ausführungsbeispiels mit den Varianten oder aller Varianten möglich.

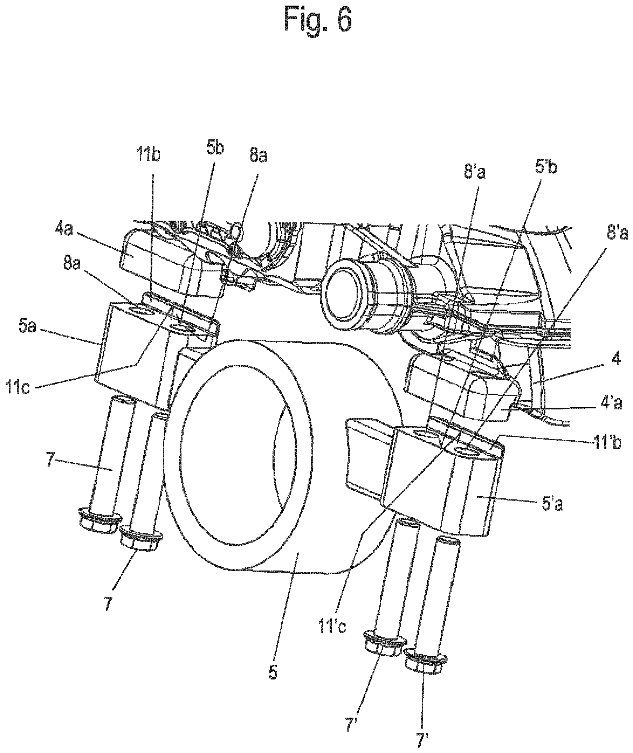

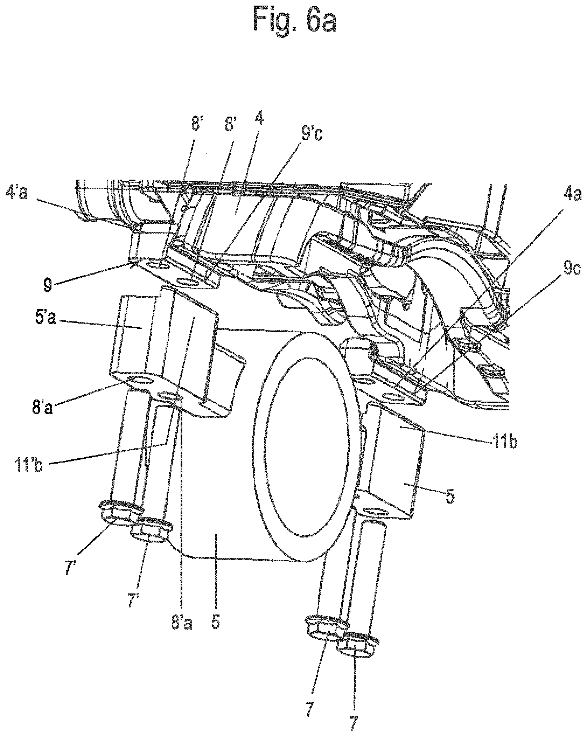

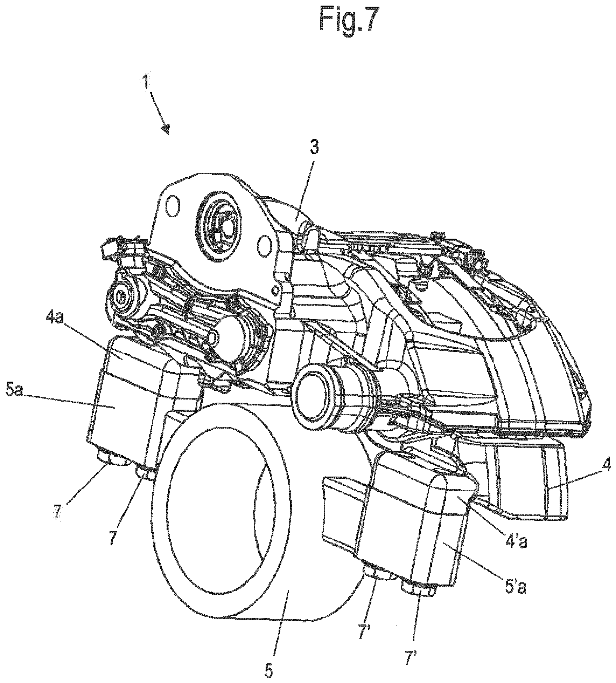

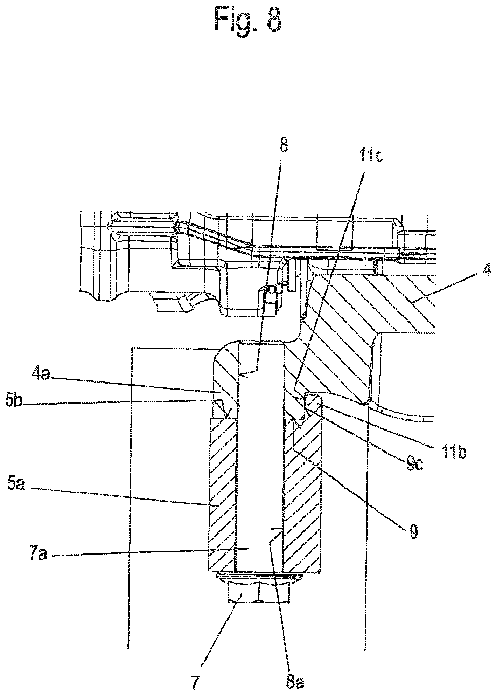

**Figuren 6** **und** **6a** zeigen schematische perspektivische Explosionsansichten der Schnittstellen des ersten Ausführungsbeispiels nach Figur 4. In Figur **7** **und** **8** sind schematische Ansichten des ersten Ausführungsbeispiels mit der Variante nach Figur 4b dargestellt.

In den Figuren 6 und 6a ist eine mögliche Ausführung der optimierten Tangentialschnittstelle dargestellt. Dabei weist der modifizierte Bremsträgerflansch 4a, 4'a eine im Grunde tangentiale Schnittstelle mit der Flanschfläche 9, 9' bestehend aus den Teilflächen 9 und 9' und ebenfalls eine axiale Fläche 11c, 11'c bestehend aus 11c und 11'c, welche senkrecht zu den Flanschflächen 9, 9' stehen. Der Begriff "axiale" Fläche bedeutet, dass die Bremsscheibendrehachse 2a senkrecht zu dieser Fläche verläuft, wohingegen eine "tangentiale" Fläche senkrecht zu der axialen Fläche steht.

Des Weiteren weist der Bremsträgerflansch 4a, 4'a vier Gewindebohrungen 8, 8' auf (es können abhängig von den Anforderungen und dem Bauraum auch mehr oder weniger sein).

Der hier schematisch dargestellte Verbindungsabschnitt 5a, 5'a des Achsflansches 5 weist ebenfalls tangentiale Flächen 5b, 5'b sowie axiale Flächen 11c, 11'c auf. Diese sind so angeordnet, dass sie im montierten Zustand, den **Figur 7** darstellt, an den jeweils korrespondierenden Flächen des Trägers (b) und (c) aneinander liegen bzw. in Kontakt stehen. Dies sind die tangentialen Flächen 5b, 5'b und 9, 9', sowie die axialen Flächen 9c; 9'c und 11c, 11'c.

Der Verbindungsabschnitt 5a, 5'a des Achsflansches 5 verfügt weiterhin über vier Durchgangsbohrungen 8a, 8'a. Die Fixierung der Scheibenbremse 1 an der Achse über die Verbindungsabschnitte 5a, 5'a an dem Achsflansch 5 erfolgt mit Hilfe von vier Befestigungselementen 7, 7', hier Schrauben, die jeweils durch eine Durchgangsbohrung 8a, 8'a hindurch mit dem Bremsträgerflansch 4 in dessen Gewindebohrungen 8, 8' verschraubt werden. Dies ist in **Figur 8** in einer schematischen Schnittdarstellung gezeigt. Sowohl die Bremsträgerflansche 4a, 4'a als auch die Verbindungsabschnitte 5a, 5'a sind mit Fasen versehen um die Montage zu erleichtern.

Bei der Montage wird die Scheibenbremse 1 mit den tangentialen Flanschflächen 9, 9' der Bremsträgerflansche 4a, 4'a auf die tangentialen Flächen 5b, 5'b der Verbindungsabschnitte 5a, 5'a des Achsflansches 5 aufgesetzt, gegen die axiale Fläche(n) 5c, 11a, 11c gedrückt und verschraubt. Dadurch wird eine genaue Positionierung (insbesondere in axialer Richtung in Richtung der Bremsscheibendrehachse 2a) erreicht.

Im Betrieb werden die entstehenden Reaktionskräfte über die tangentiale Flächen 9, 9' und 5b, 5'b sowie Befestigungselemente 7, 7' (Schrauben) über den Achsflansch 5 in die Fahrzeugachse abgeleitet. Die axialen Flächen 5c, 11a, 11c unterbinden dabei die Ausweichbewegung der beiden Flanschhälften (Bremsträgerflansche 4a, 4'a) um die Hochachse.

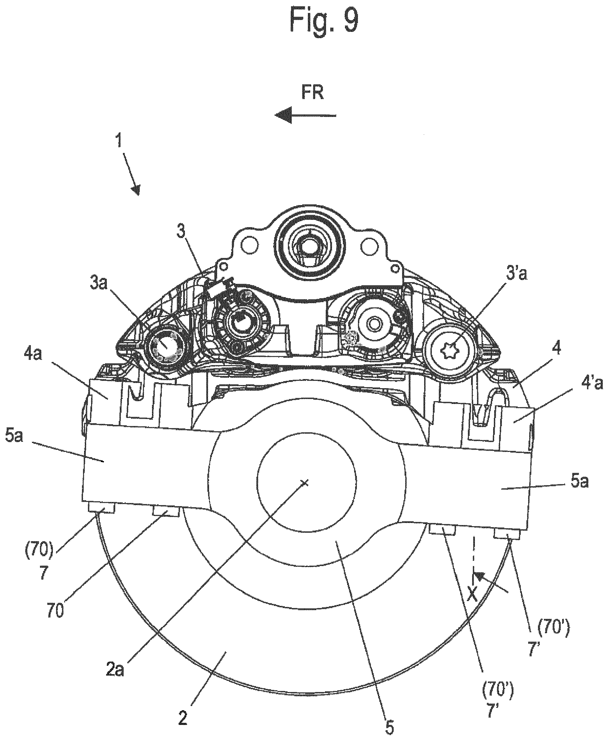

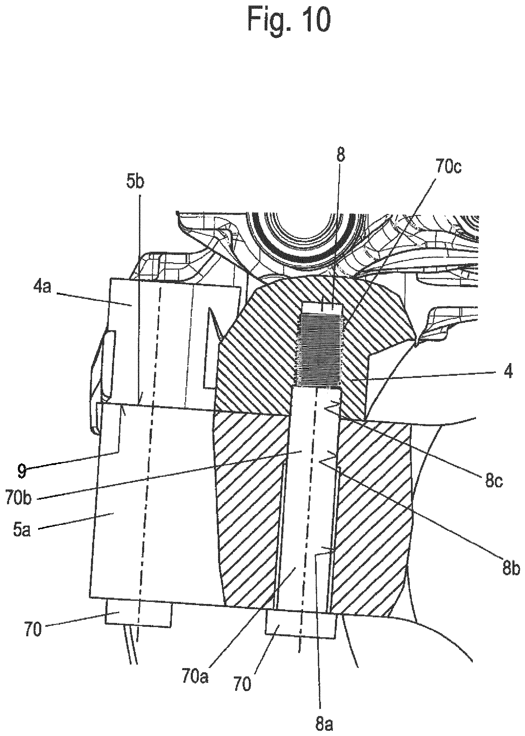

**Figur 9** stellt eine schematische Ansicht eines zweiten Ausführungsbeispiels der erfindungsgemäßen Scheibenbremse 1 dar. In **Figur 10** ist eine schematische Schnittansicht gemäß X-X nach Figur 9 gezeigt.

Im Rahmen diverser CAD- und FEM-Untersuchungen hat es sich gezeigt, dass ein massiv ausgeprägtes Element, welches einen formschlüssigen Verbund zwischen Bremsträger 4 und Achsflansch 5 erzeugt, einen sehr positiven Einfluss auf die Bauteilfestigkeit des Bremsträgers 4 hat.

In dem zweiten Ausführungsbeispiel ist mindestens eines der Befestigungselemente 7, 7' als eine Passschraube 70, 70' ausgebildet

Hauptfunktion dieser Passschraube 70, 70' ist der formschlüssige Verbund zwischen Bremsträgerflansch 4a, 4'a des Bremsträgers 4 und Verbindungsabschnitt 5a, 5'a des Achsflansches 5. Dadurch wird die Relativbewegung des Bremsträgers 4 auf dem Achsflansch 5 reduziert, was sich günstig auf die Festigkeit des Bremsträgers 4 auswirkt.

Idealerweise ist die Passschraube 70 in Fahrtrichtung FR auf der Auslaufseite montiert, wobei auch eine Montage der Passschraube 70' entgegen der Fahrtrichtung FR oder gleichzeitig an beiden Positionen (70, 70') oder an allen Positionen denkbar ist, wie in Figur 9 zu sehen ist.

Die Durchgangsbohrungen 8a, 8'a in dem Verbindungsabschnitt 5a, 5'a des Achsflansches und die Gewindebohrungen 8, 8' in dem Bremsträgerflansch 4a, 4'a des Bremsträgers 4 erfordern hier eine erhöhte Qualität im Vergleich zu Durchgangsbohrungen 8, 8' ohne weitere Funktion, so dass eine gute Kraftübertragung der Passschraube 70, 70' auf den Bremsträger 4 bzw. den Achsflansch 5 möglich ist.

Die Herstellungkosten können aber im Rahmen gehalten werden, indem die Durchgangsbohrung 8a, 8'a nicht über die ganze Länge in Passungsqualität ausgeführt ist, sondern nur im letzten Abschnitt. Dies ist in **Figur 10** gezeigt.

Die Durchgangsbohrung 8a in dem Verbindungsabschnitt 5a weist von unten an aufwärts zur Fläche 5b über etwa drei Viertel der Länge der Durchgangsbohrung 8a einen üblichen Durchmesser auf, welcher etwas größer als der Außendurchmesser eines Schaftes 70a der Passschraube 70 ist. Das letzte Viertel der Durchgangsbohrung 8a ist als eine Passungsbohrung 8b ausgeführt, welche mit einem Passungsabschnitt 70b der Passschraube 70 eine für diesen Zweck geeignete Passung bildet. Zudem ist die Gewindebohrung 8 des Bremsträgerflansches 4a in ihrem ersten Viertel (beginnend an der Flanschfläche 9) auch als eine Passungsbohrung 8c ausgeführt, welche mit einem Passungsabschnitt 70b der Passschraube 70 eine für diesen Zweck geeignete Passung bildet. Dann schließt sich die Gewindebohrung 8 an, die mit dem Gewinde 70c der Passschraube 70 in Eingriff steht.

Bei einer ein- und auslaufseitigen Ausführung der Befestigungselemente 7, 7' als Passschraube, ist eine entsprechende Passung zu wählen, so dass eine Montierbarkeit immer gewährleistet ist.

In Abhängigkeit von der auftretenden Belastung auf die Schnittstelle, können sowohl der Gewindedurchmesser als auch der Schaftdurchmesser und der Werkstoff der Passschraube 70, 70' passend gewählt werden.

Es ist auch denkbar, dass die Passschraube(n) von der Seite des Bremsträgerflansches 4a, 4'a in Richtung des Verbindungsabschnitts 5a, 5'a des Achsflansches 5 verschraubt wird.

Nebenfunktion ist die exakte Positionierung des Bremsträgers 4 auf dem Achsflansch 5, was als Montierhilfe dient. Dies wird gewährleistet durch die hochwertige Qualität der Bohrungen 8a, 8'a, 8, 8'.

Es ergeben sich folgende Vorteile:
- Reduzierung der Relativbewegung (Rutschen) zwischen Bremsträger 4 und Achsflansch 5 durch eine formschlüssige Verbindung --> Erhöhung der Bauteilfestigkeit des Bremsträgers 4.
- Montagehilfe durch exakte Positionierung der Scheibenbremse 1 am Achsflansch 5.

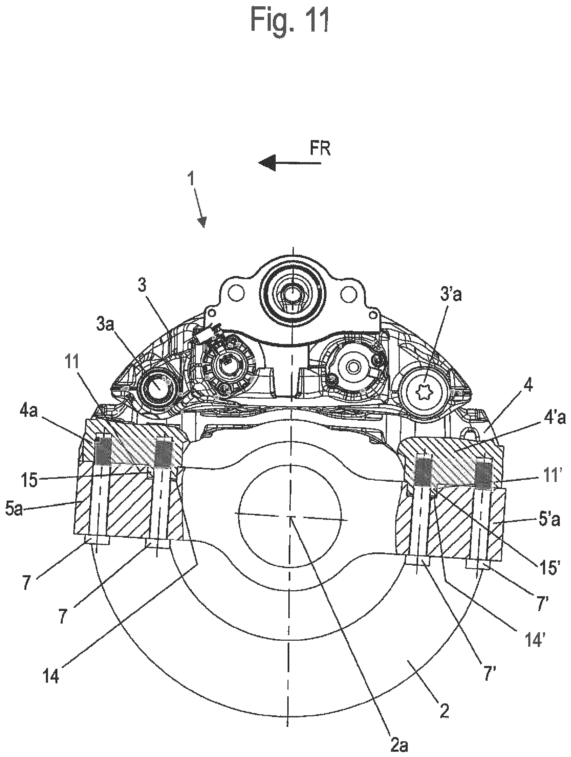

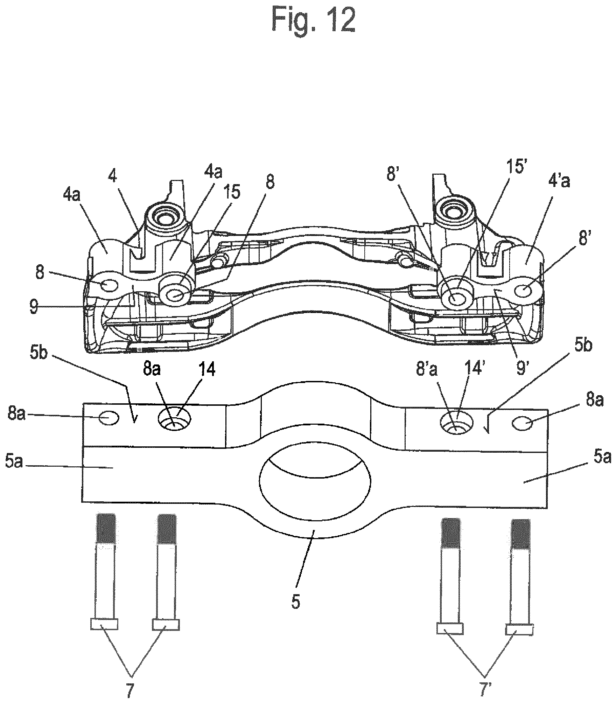

**Figur 11** zeigt eine schematische Teilansicht eines dritten Ausführungsbeispiels der erfindungsgemäßen Scheibenbremse 1. In **Figur 12** ist eine schematische Explosionsansicht zu Figur 11 dargestellt.

In dem dritten Ausführungsbeispiel wird zusätzlich zu den Befestigungselementen 7, 7', z.B. Schrauben, ein günstig ausgestaltetes Verbindungselement (Zapfen) eingesetzt.

Hauptfunktion dieses Zapfens ist der formschlüssige Verbund zwischen dem Bremsträgerflansch 4a, 4'a des Bremsträgers 4 und dem Verbindungsabschnitt 5a, 5'a des Achsflansches 5. Dadurch wird die Kraftübertragung vom Bremsträger 4 auf den Achsflansch 5 verbessert und auch die Relativbewegung des Bremsträgers 4 auf dem Achsflansch 5 reduziert, was sich günstig auf die Festigkeit des Bremsträgers 4 auswirkt.

Für die Festigkeit des Bremsträgers 4 hat sich als günstig erwiesen, wenn der Zapfen in Form eines Vorsprungs 15 nur an dem in Fahrtrichtung FR inneren Befestigungselement 7 positioniert ist. Die Positionierung eines derartigen Vorsprungs 15 kann aber auch an einer anderen Anschraubposition günstig sein. Dies ist abhängig von den geometrischen Abmaßen der Schnittstelle.

In Abhängigkeit von der auftretenden Belastung auf die Schnittstelle, kann ausserdem die Form (Langloch, Rechteck, ...) und Größe des Zapfens als Vorsprung 15 passend gewählt werden.

Der Vorsprung 15, 15' ist in dem dritten Ausführungsbeispiel zylinder- bzw. ringförmig und steht von den Flanschflächen 9, 9' des Bremsträgerflansches 4a, 4'a nach unten hervor, wobei er im zusammengebauten Zustand mit einer mit seiner Form korrespondierenden Einformung 14, 14' in dem Verbindungsabschnitt 5a, 5'a des Achsflansches 5 in Eingriff steht. Die Gewindebohrung 8, 8' erstreckt sich durch den Vorsprung 15, 15' hindurch.

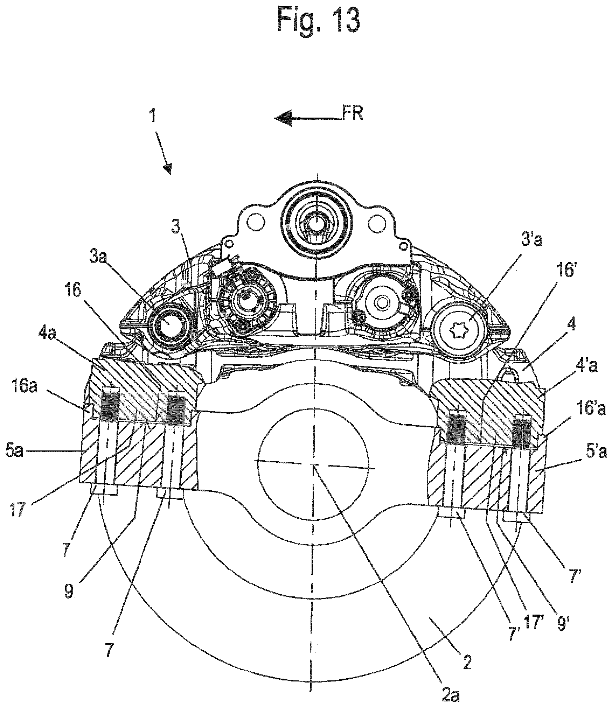

**Figuren 13 bis 18** zeigen schematische Ansichten von Varianten des dritten Ausführungsbeispiels der erfindungsgemäßen Scheibenbremse 1.

**Figur 13** zeigt einen Vorsprung 17, 17' angeformt am Bremsträgerflansch 4a, 4'a, welcher mehreren Befestigungselementen 7, 7' zugeordnet ist. Die Form dieses Vorsprungs 17, 17' ist ähnlich einer Passfeder. Er greift in eine mit ihm korrespondierende Einformung 16, 16', die einen Rand 16a, 16'a aufweist, in dem Verbindungsabschnitt 5a, 5'a ein. Dieser auch als länglicher Zapfen bezeichnete Vorsprung 17 ist von den Gewindebohrungen 8, 8' durchdrungen.

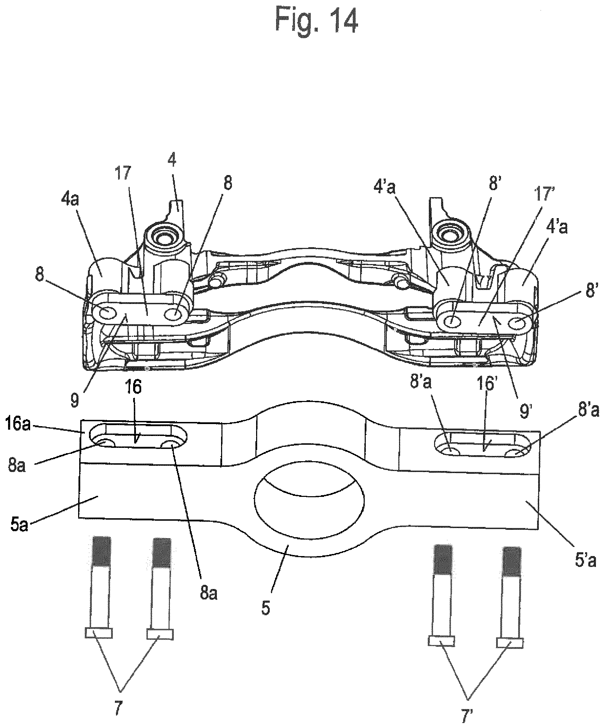

In **Figur 14** ist dazu eine Explosionsansicht gezeigt.

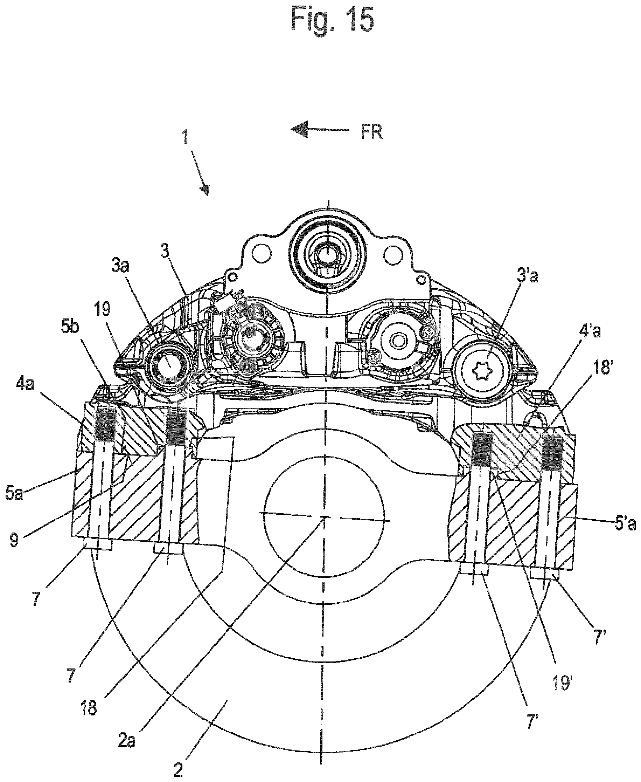

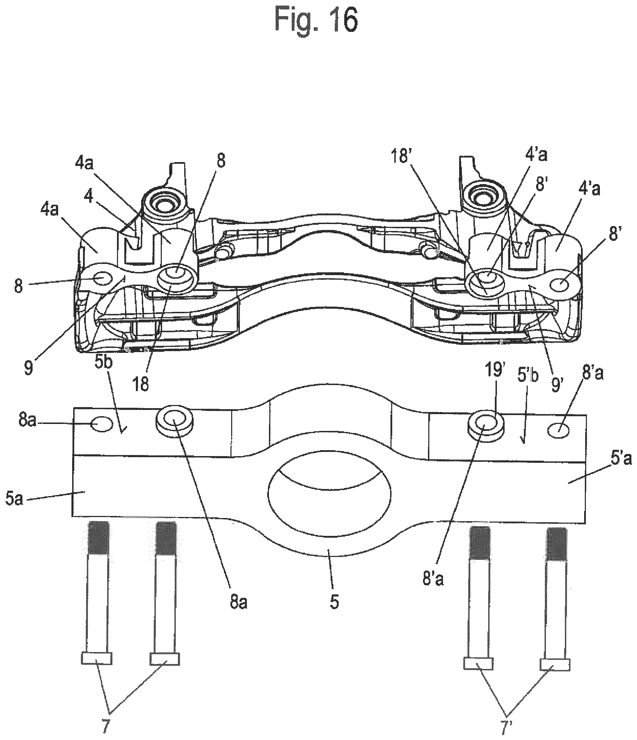

**Figur 15** zeigt eine schematische Teilansicht einer Variante des dritten Ausführungsbeispiels der erfindungsgemäßen Scheibenbremse 1. In **Figur 16** ist dazu eine schematische Explosionsansicht dargestellt.

Die Variante nach **Figur 15** ist eine geometrische Umkehr des dritten Ausführungsbeispiels nach Figur 11. Ein ring- bzw. zylinderförmiger Vorsprung 19, 19' ist an dem Verbindungsabschnitt 5a, 5'a angeformt und steht mit einer mit ihm korrespondierenden Einformung 18, 18' in dem Bremsträgerflansch 4a, 4'a in Eingriff. Durch den Vorsprung 19, 19' erstreckt sich die Durchgangsbohrung 8a, 8'a.

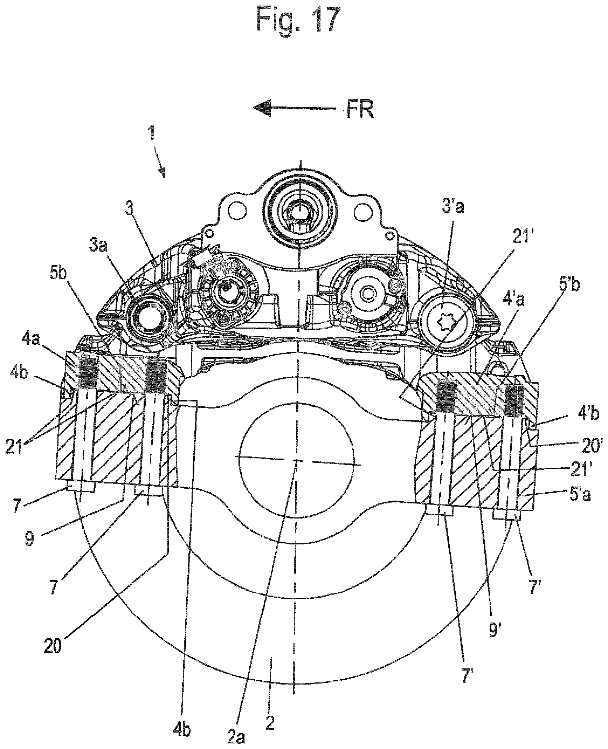

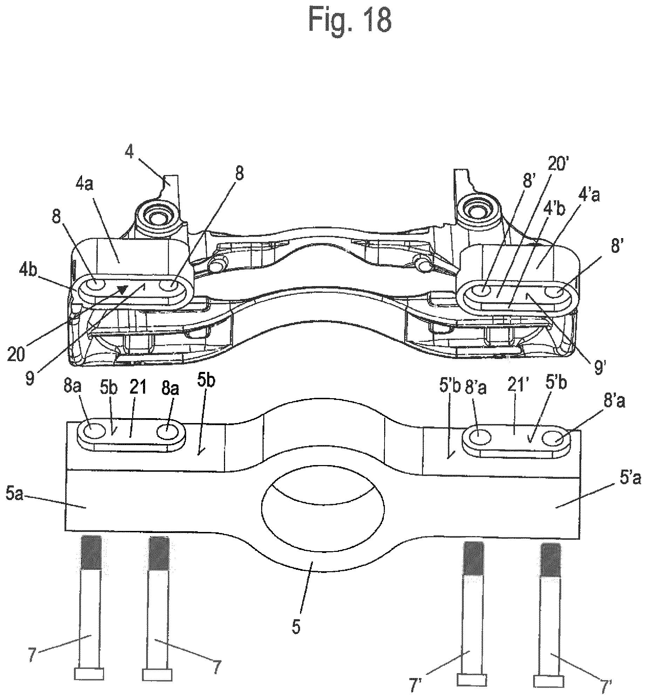

**Figur 17** zeigt eine schematische Teilansicht einer Variante des dritten Ausführungsbeispiels der erfindungsgemäßen Scheibenbremse 1. In **Figur 18** ist dazu eine schematische Explosionsansicht dargestellt.

Die Variante nach **Figur 17** ist eine geometrische Umkehr der Variante nach Figur 13. Ein Vorsprung 21, 21' ist am Verbindungsabschnitt 5a, 5'a angeformt, welcher mehreren Befestigungselementen 7, 7' zugeordnet ist. Auch diese Form des Vorsprungs 21, 21' ist ähnlich einer Passfeder. Er greift in eine mit ihm korrespondierende Einformung 20, 20', die einen Rand 4b, 4'b aufweist, in dem Bremsträgerflansch 4a, 4'a ein. Dieser auch als länglicher Zapfen bezeichnete Vorsprung 21, 21' ist von den Durchgangsbohrungen 8a, 8'a durchdrungen. Er weist an seiner Oberfläche die Fläche 5b, 5'b auf.

Alle Vorsprünge 15, 15'; 17, 17'; 19, 19'; 21, 21' der Ausführungsbeispiele/Varianten nach Figuren 11 bis 18 sind in einer Ausführung einstückig mit dem jeweiligen Bremsträgerflansch 4a, 4'a des Bremsträgers 4 bzw. mit dem jeweiligen Verbindungsabschnitt 5a, 5'a des Achsflansches 5 hergestellt.

Es ist aber auch möglich, dass die Vorsprünge 17, 17'; 21, 21', welche mehreren Befestigungselementen 7, 7' zugeordnet sind, als separate Teile ausgebildet und mit Befestigungselementen, z.B. Schrauben, und geeigneten Mitteln zur Positionierung, an dem jeweiligen Bremsträgerflansch 4a, 4'a bzw. an dem jeweiligen Verbindungsabschnitt 5a, 5'a angebracht sein können.

Diese separaten Vorsprünge 15, 15'; 17, 17'; 19, 19'; 21, 21' können z.B. handelsübliche Passfedern sein, die keiner Nacharbeit zur Herstellung einer Passung mehr bedürfen.

So können auch die ringförmigen Vorsprünge 15, 15', 19, 19' eine größere Gestalt aufweisen, z.B. Passfeder, so dass sie auch als separate Teile zur nachträglichen Anbringung mit Befestigungselementen ausgebildet sein können.

Nebenfunktion ist auch hier die exakte Positionierung des Bremsträgers 4 auf dem Achsflansch 5, was als Montierhilfe dient. Die Genauigkeit der Positionierung ist abhängig von den Toleranzen des jeweiligen Vorsprungs 15, 15'; 17, 17'; 19, 19'; 21, 21' und der dazu jeweiligen korrespondierenden Einformung 14, 14'; 16, 16'; 18, 18'; 20, 20' am Gegenstück.

Es ergeben sich folgende Vorteile:
- Reduzierung der Relativbewegung (Rutschen) zwischen Bremsträger 4 und Achsflansch 5 durch eine formschlüssige Verbindung --> Erhöhung der Bauteilfestigkeit des Bremsträgers 4.
- Montagehilfe durch exakte Positionierung der Scheibenbremse 1 am Achsflansch 5.

Die Erfindung ist durch die oben angegebenen Ausführungsbeispiele nicht eingeschränkt, sondern im Rahmen der Ansprüche modifizierbar.

### Bezugszeichenliste

- 1: Scheibenbremse
- 2: Bremsscheibe
- 2a: Bremsscheibendrehachse
- 3: Bremssattel
- 3a, 3'a: Längslager
- 4: Bremsträger
- 4a, 4'a: Bremsträgerflansch
- 4b, 4'b: Rand
- 5: Achsflansch
- 5a, 5'a: Verbindungsabschnitt
- 5b, 5'b: Fläche
- 5c: Seitenfläche
- 5d: Ausnehmung
- 6, 6': Befestigungselement
- 7, 7': Befestigungselement
- 8, 8': Gewindebohrung
- 8a, 8'a: Durchgangsbohrung
- 8b, 8c: Passungsbohrung
- 9,9': Flanschfläche
- 9a, 9c, 9'c: Fläche
- 9b: Ausnehmung
- 10, 10': Einsatz
- 11, 11b, 11'b: Längsvorsprung
- 11a, 11c, 11'c: Fläche
- 12, 12'; 13, 13': Längsvorsprung
- 12a, 12'a; 13a, 13'a: Fläche
- 14, 14': Einformung
- 15, 15': Vorsprung
- 16, 16': Einformung
- 16a, 16'a: Rand
- 17, 17': Vorsprung
- 18, 18': Einformung
- 19, 19': Vorsprung
- 20, 20': Einformung
- 21, 21': Vorsprung
- 70, 70': Passschraube
- 70a: Schaft
- 70b: Passabschnitt
- 70c: Gewinde
- FR: Fahrtrichtung
- BM: Bremsmoment

## Patentansprüche

1. Anordnung einer Scheibenbremse (1) für ein Nutzfahrzeug und eines Achsflansches (5), wobei die Scheibenbremse (1) einen eine Bremsscheibe (2) umfassenden Bremssattel (3), der an einem ortsfesten Bremsträger (4) bezogen auf die Bremsscheibe (2), axial verschiebbar befestigt ist, aufweist, wobei der Bremsträger (4) an dem Achsflansch (5) in tangentialen Schnittstellen, die zur Bremsscheibe (2) senkrecht angeordnete Flächen (5b, 5'b; 9, 9') aufweisen, mit Befestigungselementen (7, 7') befestigt ist,
wobei die tangentialen Schnittstellen mindestens eine formschlüssige Verbindung zwischen jeweils einem Bremsträgerflansch (4a, 4'a) des Bremsträgers (4) und jeweils einem Verbindungsabschnitt (5a, 5'a) des Achsflansches (5) aufweisen,
**dadurch gekennzeichnet, dass**
die mindestens eine formschlüssige Verbindung mindestens einen Zapfen in Form eines Vorsprungs (15, 15'; 17, 17'; 19, 19'; 21, 21') und eine dazu jeweilige korrespondierende Einformung (14, 14'; 16, 16'; 18, 18'; 20, 20') am Gegenstück für einen Eingriff des Vorsprungs (15, 15'; 17, 17'; 19, 19'; 21, 21') aufweist.

2. Scheibenbremse nach Anspruch 1, **dadurch gekennzeichnet, dass** die mindestens eine formschlüssige Verbindung mindestens zwei aufeinander senkrecht stehende Flächen (5b, 5'b und 5c; 5b, 5'b und 11a; 5b, 5'b und 11c, 11'c) eines jeweiligen Verbindungsabschnitts (5a, 5'a) des Achsflansches (5) und mit diesen in Kontakt stehende mindestens zwei aufeinander senkrecht stehende Flächen (9, 9' und 9a; 9, 9' und 9c; 9, 9' und 11c, 11'c; 9, 9' und 12a, 12'a; 9, 9' und 13a, 13'a) eines jeweiligen Bremsträgerflansches (4a, 4'a) des Bremsträgers (4) aufweist.

3. Scheibenbremse nach Anspruch 2, **dadurch gekennzeichnet, dass** die mindestens zwei aufeinander senkrecht stehenden Flächen (5b, 5'b und 5c; 5b, 5'b und 11a; 5b, 5'b und 11c, 11'c) eines jeweiligen Verbindungsabschnitts (5a, 5'a) des Achsflansches (5) zur Bremsscheibe (2) senkrecht angeordneten Flächen (5b, 5'b) und auf diesen senkrecht stehende, zur Bremsscheibe (2) parallel angeordnete Flächen (5c; 11a; 11c, 11'c) an Längsvorsprüngen (11, 11'; 11b, 11'b) und Ausnehmungen (5d) aufweisen, wobei die mindestens zwei aufeinander senkrecht stehenden Flächen (9, 9' und 9a; 9, 9' und 9c; 9, 9' und 11c, 11'c; 9, 9' und 12a, 12'a; 9, 9' und 13a, 13'a) eines jeweiligen Bremsträgerflansches (4a, 4'a) des Bremsträgers (4) zur Bremsscheibe (2) senkrecht angeordneten Flächen (9, 9') und auf diesen senkrecht stehende, zur Bremsscheibe (2) parallel angeordnete Flächen (9a, 9c, 11, 11'c, 12a, 12'a, 13a, 13'a) an Längsvorsprüngen (12, 13) und Ausnehmungen (9b) aufweisen.

4. Scheibenbremse nach Anspruch 1, **dadurch gekennzeichnet, dass** die mindestens eine formschlüssige Verbindung mindestens eine Passschraube (70, 70') aufweist.

5. Scheibenbremse nach Anspruch 4, **dadurch gekennzeichnet, dass** die formschlüssige Verbindung mit der mindestens einen Passschraube (70, 70') eine Durchgangsbohrung (8a, 8'a) mit mindestens einem teilweisen Abschnitt mit einer Passungsbohrung (8b) und eine Gewindebohrung (8, 8') mit einem Abschnitt mit einer Passungsbohrung (8c) aufweist.

6. Scheibenbremse nach Anspruch 5, **dadurch gekennzeichnet, dass** die Durchgangsbohrung (8a, 8'a) mit dem mindestens einen teilweisen Abschnitt mit einer Passungsbohrung (8b) in dem Verbindungsabschnitt (5a, 5'a) des Achsflansches (5) und die Gewindebohrung (8, 8') mit dem Abschnitt mit einer Passungsbohrung (8c) in dem Bremsträgerflansch (4a, 4'a) des Bremsträgers (4) angeordnet ist, oder dass die Durchgangsbohrung (8a, 8'a) mit dem mindestens einen teilweisen Abschnitt mit einer Passungsbohrung (8b) in dem Bremsträgerflansch (4a, 4'a) des Bremsträgers (4) und die Gewindebohrung (8, 8') mit dem Abschnitt mit einer Passungsbohrung (8c) in dem Verbindungsabschnitt (5a, 5'a) des Achsflansches (5) angeordnet ist.

7. Scheibenbremse nach Anspruch 1, **dadurch gekennzeichnet, dass** der mindestens eine Zapfen in Form eines Vorsprungs (15, 15'; 17, 17'; 19, 19'; 21, 21') an dem Bremsträgerflansch (4a, 4'a) des Bremsträgers (4) angeordnet ist und die dazu jeweilige korrespondierende Einformung (14, 14'; 16, 16'; 18, 18'; 20, 20') an dem Verbindungsabschnitt (5a, 5'a) des Achsflansches (5) für einen Eingriff des Vorsprungs (15, 15'; 17, 17'; 19, 19'; 21, 21') angeordnet ist, oder dass der mindestens eine Zapfen in Form eines Vorsprungs (15, 15'; 17, 17'; 19, 19'; 21, 21') an dem Verbindungsabschnitt (5a, 5'a) des Achsflansches (5) angeordnet ist und die dazu jeweilige korrespondierende Einformung (14, 14'; 16, 16'; 18, 18'; 20, 20') an dem Bremsträgerflansch (4a, 4'a) des Bremsträgers (4) angeordnet ist.

8. Scheibenbremse nach Anspruch 1 oder 7, **dadurch gekennzeichnet, dass** der mindestens eine Zapfen in Form eines Vorsprungs (15, 15'; 17, 17'; 19, 19'; 21, 21') eine zylindrige bzw. ringförmige Gestalt oder die Gestalt einer Passfeder aufweist.

9. Scheibenbremse nach Anspruch 1, Anspruch 7 oder 8, **dadurch gekennzeichnet, dass** die Vorsprünge (15, 15'; 17, 17'; 19, 19'; 21, 21') einstückig mit dem jeweiligen Bremsträgerflansch (4a, 4'a) des Bremsträgers (4) bzw. mit dem jeweiligen Verbindungsabschnitt (5a, 5'a) des Achsflansches (5) ausgebildet sind.

10. Scheibenbremse nach Anspruch 1, Anspruch 7 oder 8, **dadurch gekennzeichnet, dass** die Vorsprünge (15, 15'; 17, 17'; 19, 19'; 21, 21') als separate Teile ausgebildet und mit Befestigungselementen, z.B. Schrauben, und geeigneten Mitteln zur Positionierung, an dem jeweiligen Bremsträgerflansch (4a, 4'a) bzw. an dem jeweiligen Verbindungsabschnitt (5a, 5'a) angebracht sind.

11. Scheibenbremse nach Anspruch 9, **dadurch gekennzeichnet, dass** die Vorsprünge (15, 15'; 17, 17'; 19, 19'; 21, 21') als separate Teile Passfedern sind.

## Claims

1. Arrangement of a disc brake (1) for a commercial vehicle and of an axle flange (5), wherein the disc brake (1) has a brake calliper (3), which encompasses a brake disc (2) and is attached to a stationary adapter (4) while being axially displaceable with reference to the brake disc (2), wherein the adapter (4) is attached to the axle flange (5) with fastening elements (7, 7') in tangential interfaces having surfaces (5b, 5'b; 9, 9') arranged perpendicular to the brake disc (2),
wherein the tangential interfaces have at least one positive-locking connection between one adapter flange (4a, 4'a) each of the adapter (4) and one connecting section (5a. 5'a) each of the axle flange (5),
**characterised in that**
the at least one positive-locking connection has at least one peg in the form of a projection (15, 15'; 17, 17'; 19, 19'; 21, 21') and a corresponding recess (14, 14'; 16, 16'; 18, 18'; 20, 20') at the counterpart for an engagement of the projection (15, 15'; 17, 17'; 19, 19'; 21, 21').

2. Disc brake according to claim 1, **characterised in that** the at least one positive-locking connection has at least two mutually perpendicular surfaces (5b, 5'b and 5c; 5b, 5'b and 11a; 5b, 5'b and 11c, 11'c) of a respective connecting section (5a. 5'a) of the axle flange (5) and, in contact therewith, at least two mutually perpendicular surfaces (9. 9' and 9a; 9. 9' and 9c; 9. 9' and 11c, 11'c; 9. 9' and 12a, 12'a; 9. 9' and 13a, 13'a) of a respective adapter flange (4a, 4'a) of the adapter (4).

3. Disc brake according to claim 2, **characterised in that** the at least two mutually perpendicular surfaces (5b, 5'b and 5c; 5b, 5'b and 11a; 5b, 5'b and 11c, 1 1'c) of a respective connecting section (5a. 5'a) of the axle flange (5) have surfaces (5b, 5'b) arranged to be perpendicular to the brake disc (2) and, standing perpendicularly thereon, surfaces (5c; 11a; 11c, 11'c) arranged parallel to the brake disc (2) at longitudinal projections (11, 11'; 11b 11'b) and recesses (5d), wherein the at least two mutually perpendicular surfaces (9. 9' and 9a; 9. 9' and 9c; 9. 9' and 11c, 11'c; 9. 9' and 12a, 12'a; 9. 9' and 13a, 13'a) of a respective adapter flange (4a, 4'a) of the adapter (4) have surfaces (9. 9') arranged to be perpendicular to the brake disc (2) and, standing perpendicularly thereon, surfaces (9a, 9c, 11, 11'c, 12a, 12'a, 13a, 13'a) arranged parallel to the brake disc (2) at longitudinal projections (12, 13) and recesses (9b).

4. Disc brake according to claim 1, **characterised in that** the at least one positive-locking connection has at least one locating screw (70, 70').

5. Disc brake according to claim 4, **characterised in that** the positive-locking connection with the at least one locating screw (70, 70') has a through-hole (8a, 8'a) with at least a partial section with a fitting bore (8b) and a threaded hole (8, 8') with a section with a fitting bore (8c).

6. Disc brake according to claim 5, **characterised in that** the through-hole (8a, 8'a) with the at least a partial section with a fitting bore (8b) is located in the connecting section (5a, 5'a) of the axle flange (5) and the threaded hole (8, 8') with the section with a fitting bore (8c) is located in the adapter flange (4a, 4'a) of the adapter (4), or **in that** the through-hole (8a, 8'a) with the at least a partial section with a fitting bore (8b) is located in the adapter flange (4a, 4'a) of the adapter (4) and the threaded hole (8, 8') with the section with a fitting bore (8c) is located in the connecting section (5a, 5'a) of the axle flange (5).

7. Disc brake according to claim 1, **characterised in that** the at least one peg in the form of a projection (15, 15'; 17, 17'; 19, 19'; 21, 21') is located at the adapter flange (4a, 4'a) of the adapter (4) and the respectively corresponding recess (14, 14'; 16, 16'; 18, 18'; 20, 20') is located at the connecting section (5a, 5'a) of the axle flange (5) for an engagement of the projection (15, 15'; 17, 17'; 19, 19'; 21, 21'), or **in that** the at least one peg in the form of a projection (15, 15'; 17, 17'; 19, 19'; 21, 21') is located at the connecting section (5a, 5'a) of the axle flange (5) and the respectively corresponding recess (14, 14'; 16, 16'; 18, 18'; 20, 20') is located at the adapter flange (4a, 4'a) of the adapter (4).

8. Disc brake according to claim 1 or 7, **characterised in that** the at least one peg in the form of a projection (15, 15'; 17, 17'; 19, 19'; 21, 21') has a cylindrical or annular shape or the shape of a feather key.

9. Disc brake according to claim 1, claim 7 or 8, **characterised in that** the projections (15, 15'; 17, 17'; 19, 19'; 21, 21') are designed integrally with the respective adapter flange (4a, 4'a) of the adapter (4) or with the respective connecting section (5a, 5'a) of the axle flange (5).

10. Disc brake according to claim 1, claim 7 or 8, **characterised in that** the projections (15, 15'; 17, 17'; 19, 19'; 21, 21') are designed as separate parts and attached to the respective adapter flange (4a, 4'a) or to the respective connecting section (5a, 5'a) by means of fastening elements, e.g. screws, and suitable means for positioning.

11. Disc brake according to claim 9, **characterised in that** the projections (15, 15'; 17, 17'; 19, 19'; 21, 21') designed as separate parts are feather keys.

## Revendications

1. Agencement d'un frein (1) à disque pour un véhicule utilitaire et d'une bride (5) d'essieu, dans lequel le frein (1) à disque a un étrier (3) de frein, qui comprend un disque (2) de frein et qui est fixé, de manière à pouvoir coulisser axialement par rapport au disque (2) de frein, sur un flasque (4) de frein fixe en emplacement, dans lequel le flasque (4) de frein est fixé par des éléments (7, 7') de fixation sur la bride (5) d'essieu, en des points d'intersection tangentiels, qui ont des surfaces (5, 5'b ; 9, 9') disposées perpendiculairement au disque (2) de frein,
dans lequel les points d'intersection tangentiels ont au moins une liaison à complémentarité de forme entre respectivement une bride (4a, 4'a) du flasque (4) de frein et respectivement un tronçon (5a, 5'a) de liaison de la bride (5) d'essieu,
**caractérisé en ce que**
la au moins une liaison par complémentarité de forme a au moins un tenon sous la forme d'une saillie (15, 15' ; 17, 17' ; 19, 19' ; 21, 21') et une conformation (14, 14' ; 16, 16' ; 18, 18' ; 20, 20') respective y correspondant sur la pièce antagoniste pour une pénétration de la saillie (15, 15' ; 17, 17' ; 19, 19' ; 21, 21').

2. Frein à disque suivant la revendication 1, **caractérisé en ce que** la au moins une liaison à complémentarité de forme a au moins deux surfaces (5b, 5'b et 5c ; 5b, 5'b et 11a ; 5b, 5'b et 11c, 11'c) perpendiculaires entre elles d'un tronçon (5a, 5'a) respectif de liaison de la bride (5) d'essieu et, en contact avec celles-ci, au moins deux surfaces (9, 9' et 9a ; 9, 9' et 9c ; 9, 9' et 11c, 11'c ; 9, 9' et 12a, 12'a ; 9, 9' et 13a, 13'a) perpendiculaires entre elles d'une bride (4a, 4'a) respective du flasque (4) de frein.

3. Frein à disque suivant la revendication 2, **caractérisé en ce que** les au moins deux surfaces (5b, 5'b et 5c ; 5b, 5'b et 11a ; 5b, 5'b et 11c, 11'c) perpendiculaires entre elles d'un tronçon (5a, 5'a) de liaison de la bride (5) de l'essieu ont des surfaces (5b, 5'b) disposées perpendiculairement au disque (2) de frein et, perpendiculairement à celles-ci, des surfaces (5c ; 11a ; 11c ; 11'c), disposées parallèlement au disque (2) de frein, de saillies (11, 11' ; 11b, 11'b) longitudinales et d'évidements (5d), dans lequel les au moins deux surfaces (9, 9' et 9a ; 9, 9' et 9c ; 9, 9' et 11c, 11'c ; 9, 9' et 12a, 12'a ; 9, 9' et 13a, 13'a) perpendiculaires entre elles d'une bride (4a, 4'a) respective du flasque (4) de frein ont des surfaces (9, 9') disposées perpendiculairement au disque (2) de frein et, perpendiculairement à celles-ci, des surfaces (9a, 9c, 11, 11'c, 12a, 12'a, 13'a), disposées parallèlement au disque (2) de frein, de saillies (12, 13) longitudinales et d'évidements (9b).

4. Frein à disque suivant la revendication 1, **caractérisé en ce qu'**au moins une liaison à complémentarité de forme a au moins un boulon (70, 70') ajusté.

5. Frein à disque suivant la revendication 4, **caractérisé en ce que** la liaison à complémentarité de forme ayant le au moins un boulon (70, 70') ajusté a un trou (8a, 8'a) de passage ayant au moins un tronçon partiel ayant un trou (8b) d'ajustement et un trou (8, 8') taraudé ayant un tronçon ayant un trou (8c) d'ajustement.

6. Frein à disque suivant la revendication 5, **caractérisé en ce que** le trou (8a, 8'a) de passage ayant le au moins un tronçon en partie ayant un trou (8b) d'ajustement est disposé dans le tronçon (5a, 5'a) de liaison de la bride (5) de l'essieu et le trou (8, 8') taraudé ayant la partie ayant le trou (8c) d'ajustement est disposé dans la bride (4a, 4'a) du flasque (4) de frein, ou **en ce que** le trou (8a, 8'a) de passage ayant le au moins en partie un tronçon ayant un trou (8b) d'ajustement est disposé dans la bride (4a, 4'a) du flasque (4) de frein et le trou (8, 8') taraudé ayant le tronçon ayant un trou (8c) d'ajustement est disposé dans le tronçon (5a, 5'a) de liaison de la bride (5) d'essieu.

7. Frein à disque suivant la revendication 1, **caractérisé en ce que** le au moins un tenon, sous la forme d'une saillie (15, 15' ; 17, 17' ; 19, 19' ; 21, 21'), est disposé sur la bride (4a, 4'a) du flasque (4) de frein et la conformation (14, 14' ; 16, 16' ; 18, 18' ; 20, 20') respective y correspondant est disposée sur le tronçon (5a, 5'a) de liaison de la bride (5) de l'essieu pour une pénétration de la saillie (15, 15' ; 17, 17' ; 19, 19' ; 21, 21'), ou **en ce qu'**au moins un tenon, sous la forme d'une saillie (15, 15' ; 17, 17' ; 19, 19' ; 21, 21'), est disposée sur le tronçon (5a, 5'a) de liaison de la bride (5) de l'essieu et la conformation (14, 14' ; 16, 16' ; 18, 18' ; 20, 20') respective y correspondant est disposée sur la bride (4a, 4'a) du flasque (4) de frein.

8. Frein à disque suivant la revendication 1 ou 7, **caractérisé en ce qu'**au moins un tenon, sous la forme d'une saillie (15, 15' ; 17, 17' ; 19, 19' ; 21, 21') a une forme cylindrique ou annulaire ou la forme d'un ressort d'ajustement.

9. Frein à disque suivant la revendication 1 ou la revendication 7 ou 8, **caractérisé en ce que** les saillies (15, 15' ; 17, 17' ; 19, 19' ; 21, 21') sont d'une seule pièce avec la bride (4a, 4'a) respective du flasque (4) de frein ou avec le tronçon (5a, 5'a) respectif de liaison de la bride (5) de l'essieu.

10. Frein à disque suivant la revendication 1 ou la revendication 7 ou 8, **caractérisé en ce que** les saillies (15, 15' ; 17, 17' ; 19, 19' ; 21, 21') sont constituées sous la forme de pièces distinctes et sont montées par des éléments de fixation, par exemple des boulons, par des moyens appropriés de mise en position sur la bride (4a, 4'a) respective du flasque de frein ou sur le tronçon (5a, 5'a) respectif de liaison.

11. Frein à disque suivant la revendication 9, **caractérisé en ce que** les saillies (15, 15' ; 17, 17' ; 19, 19' ; 21, 21') sont des ressorts d'ajustement sous forme de pièces distinctes.
